# DEMANDE DE BREVET EUROPEEN

(11) **EP 4 383 021 A1**
(43) Date de publication de la demande: **12.06.2024**
(21) Numéro de dépôt: 23213870.1
(22) Date de dépôt: 04.12.2023
(51) Int. Cl.: G05B 15/02

(54) **PROCÉDÉ D'ASSERVISSEMENT ET ASSERVISSEMENT DE POSITION D'EQUIPEMENTS DOMESTIQUES**

(30) Priorité: 05.12.2022 FR 2212770
(71) Demandeur: Orange, 92130 Issy-les-Moulineaux (FR)
(72) Inventeur: GREGOIRE, Christian, 92326 Chatillon (FR); NICOL, Rozenn, 92326 Chatillon (FR); LE PENNEC, Gildas, 92326 Chatillon (FR)

(57) **Abrégé**

L'invention concerne l'asservissement de position d'équipements domestiques, en particulier l'ouverture, la fermeture, l'entrebâillement... de fenêtre murale, fenêtre de toit aussi nommé fenêtre rampante, porte-fenêtre, porte...

Un objet de l'invention est un procédé d'asservissement de position d'équipements domestiques, le procédé d'asservissement comportant une génération d'une commande en fonction d'un signal sonore capté, la commande générée étant apte à déclencher le contrôle par un actionneur d'un équipement domestique, l'actionneur déplaçant l'équipement domestique dans une position fonction de la commande.

Ainsi, le nombre de contextes d'automatisation est augmenté et comporte des contextes non météo, par exemple des contextes de nuisances signal sonores, et, éventuellement, aussi des contextes météo.

## Description

### Domaine technique

L'invention concerne l'asservissement de position d'équipements domestiques, en particulier l'ouverture, la fermeture, l'entrebâillement... d'ouvrant tel que fenêtre murale, fenêtre de toit aussi nommé fenêtre rampante, porte-fenêtre, porte...

### État de la technique

Il existe des systèmes d'asservissement pour l'ouverture et la fermeture d'équipement domestique de type fenêtre. Les systèmes existants proposent une automatisation en fonction d'informations météorologiques : notamment : pluie, vent. Ainsi, lorsque le système d'asservissement d'une fenêtre en position ouverte a connaissance de vent ou de pluie dans le lieu où est située la fenêtre, notamment au moyen d'un détecteur de vent ou pluie implémenté sur ou dans la structure de la fenêtre, alors le système d'asservissement déclenche la fermeture de la fenêtre.

Les détecteurs de pluie actuellement utilisés par ces systèmes d'asservissement de fenêtres sont électromagnétiques, hygroscopiques ou le plus généralement optiques. Le capteur de vent est notamment un capteur de vibrations comme pour les stores bannes ou un anémomètre.

Certaines fenêtres automatisées, en l'occurrence des fenêtres à ouverture motorisées, ont une fonction de ventilation "refroidissement nocturne" qui permet une climatisation naturelle sans surcoût énergétique. Pour optimiser l'utilisation du refroidissement nocturne, les capteurs intégrés aux fenêtres sont couplés à des capteurs internes et externes de température. Ainsi, lorsque la température interne captée est supérieure à une température interne programmée et à la température externe, cette automatisation déclenche l'ouverture des fenêtres.

Par conséquent, l'automatisation d'ouverture/fermeture de fenêtre est limitée à un nombre restreint de contextes d'automatisation fonction des capteurs équipant la fenêtre. Plus le nombre de contextes d'automatisation souhaité par l'utilisateur est important, plus la fenêtre sera complexe car doté d'un grand nombre de capteurs.

Eventuellement, pour éviter de suréquiper les fenêtres, soit les capteurs signal sont mutualisés, soit un assistant domotique automatise l'ouverture de fenêtres du domicile à des informations météorologiques fournies par des sites Internet spécialisés en météo. Le risque alors est lié aux imprécisions des prédictions météo, et à la non prise en compte de données spécifiques au domicile (par exemple, température intérieure, type de fenêtre : coulissante, française, de toit, tel qu'un Velux^{™}, etc.).

En outre, quelle que soit la provenance des informations sur lesquels se base l'automatisation de l'ouverture/fermeture de fenêtre, il s'agit uniquement d'informations météorologiques ce qui limite les contextes d'automatisation.

### Exposé de l'invention

Un des buts de la présente invention est de remédier à des inconvénients/insuffisances de l'état de la technique/ d'apporter des améliorations par rapport à l'état de la technique.

Un objet de l'invention est un procédé d'asservissement de position d'équipements domestiques, le procédé d'asservissement comportant une génération d'une commande en fonction d'un signal sonore capté, la génération de commande étant déclenchée en fonction du type de signal sonore capté, la commande générée étant apte à déclencher le contrôle par un actionneur d'un équipement domestique, l'actionneur déplaçant l'équipement domestique dans une position fonction de la commande.

Ainsi, le nombre de contextes d'automatisation est augmenté et comporte des contextes non météo, par exemple des contextes de nuisances signal sonores, et, éventuellement, aussi des contextes météo.

Avantageusement, le procédé d'asservissement comporte une analyse signal sonore de signal sonore capté, la commande générée étant fonction du résultat d'analyse du signal sonore capté.

Avantageusement, le procédé d'asservissement comporte une reconnaissance signal sonore de signal sonore capté, la commande générée étant fonction du signal sonore reconnu.

Avantageusement, le procédé d'asservissement comporte une localisation de sources sonores du signal sonore capté, la commande générée étant fonction de la localisation de sources sonores du signal sonore capté par rapport à la position d'un équipement domestique.

Avantageusement, le procédé d'asservissement comporte une prédiction d'évolution du signal sonore capté postérieure à l'instant de capture sonore.

Ainsi, lorsque le contexte de modification de position est intermittent, par exemple un bruit intermittent, l'automatisation évitera la succession d'ouverture et de fermeture d'ouvrant, aussi nommé bagotement de l'état de la fenêtre, qui peut être pénible à une personne présente près de la fenêtre ou dans la pièce dans laquelle la fenêtre est située. En outre, une succession d'ouverture et de fermeture pourrait engendrer une usure précoce des pièces de changement de position de la fenêtre (charnière, galet de coulissement, etc.) ce qui est ainsi réduit.

Avantageusement, la commande générée est une commande programmée en fonction d'au moins un paramètre prédit du signal sonore capté.

Ainsi, l'automatisation est mise en oeuvre par exemple sur des plages horaires programmées, ou en fonction de valeurs programmées de données captées par exemple, détection de présence et/ou d'absence, une automatisation de la fermeture de fenêtre en cas de nuisance signal sonore sera autorisée uniquement si la température intérieure est dans une plage de température programmée, une automatisation de l'ouverture de la fenêtre à la fin d'une nuisance signal sonore uniquement si aucune pluie n'est détectée, etc.

Avantageusement, le procédé d'asservissement comporte une détection d'un contexte de modification de position d'équipements domestiques en fonction d'un signal sonore capté, la détection d'un contexte de modification de position d'équipements domestiques déclenchant la génération de commande.

Avantageusement, la détection de contexte de modification de position d'équipements domestiques est fonction d'un critère relatif au signal sonore capté parmi les critères suivants :
- niveau signal sonore du signal sonore capté,
- type de signal sonore capté,
- durée prédite du signal sonore capté,
- fréquence prédite d'apparition du signal sonore capté.

Avantageusement, la détection de contexte de modification de position est fonction d'au moins un paramètre d'asservissement préconfiguré.

Avantageusement, selon une implémentation de l'invention, les différentes étapes du procédé selon l'invention signal sont mises en oeuvre par un logiciel ou programme d'ordinateur, ce logiciel comprenant des instructions logicielles destinées à être exécutées par un processeur de données d'un asservissement et/ou d'un système d'asservissement, notamment un assistant domotique, et étant conçus pour commander l'exécution des différentes étapes de ce procédé.

L'invention vise donc aussi un programme comprenant des instructions de code de programme pour l'exécution des étapes du procédé d'asservissement lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est également un asservissement de position d'équipements domestiques comportant un générateur de commande en fonction d'un signal sonore capté, le générateur de commande étant déclenché en fonction du type de signal sonore capté, la commande générée étant apte à déclencher le contrôle par un actionneur d'un équipement domestique, l'actionneur déplaçant l'équipement domestique dans une position fonction de la commande.

Avantageusement, le générateur de commande est apte à générer plusieurs commandes en fonction d'un signal sonore capté, chaque commande générée étant apte à déclencher le contrôle par un actionneur distinct d'un équipement domestique distinct.

Avantageusement, un équipement domestique est un équipement parmi les suivants :
- un ouvrant ;
- un réducteur de bruit ;
- un dispositif d'annulation d'écho.

Un objet de l'invention est, en outre, un système d'asservissement comportant :
- un capteur sonore colocalisé avec un équipement domestique ;
- un actionneur de l'équipement domestique apte à modifier la position de l'équipement domestique
- un asservissement de position d'équipements domestiques apte à générer une commande en fonction d'un signal sonore capté par le capteur déclenché en fonction du type de signal sonore capté, la commande générée étant apte à déclencher le contrôle par l'actionneur de l'équipement domestique, l'actionneur déplaçant l'équipement domestique dans une position fonction de la commande.

Avantageusement, le système d'asservissement comporte plusieurs capteurs sonores colocalisés avec des équipements domestiques distincts, et l'asservissement de position étant apte à générer une commande de contrôle d'un des équipements domestiques colocalisé avec le capteur sonore ayant capté le signal sonore capté en fonction duquel la commande est générée.

### Brève description des dessins

Les caractéristiques et avantages de l'invention apparaîtront plus clairement à la lecture de la description, faite à titre d'exemple, et des figures s'y rapportant qui représentent :
Figure 1, un schéma simplifié d'un procédé d'asservissement de position d'équipements domestiques selon l'invention,
Figure 2, un schéma simplifié d'un asservissement de position d'équipements domestiques selon l'invention,
Figure 3a, un schéma simplifié d'un exemple de situation d'usage de l'asservissement de position d'équipements domestiques selon l'invention,
Figure 3b, un schéma simplifié de différentes positions d'un équipement domestique coulissant asservi par l'asservissement selon l'invention,
Figure 3c, un schéma simplifié de différentes positions d'un équipement domestique de toit asservi par l'asservissement selon l'invention.

### Description des modes de réalisation

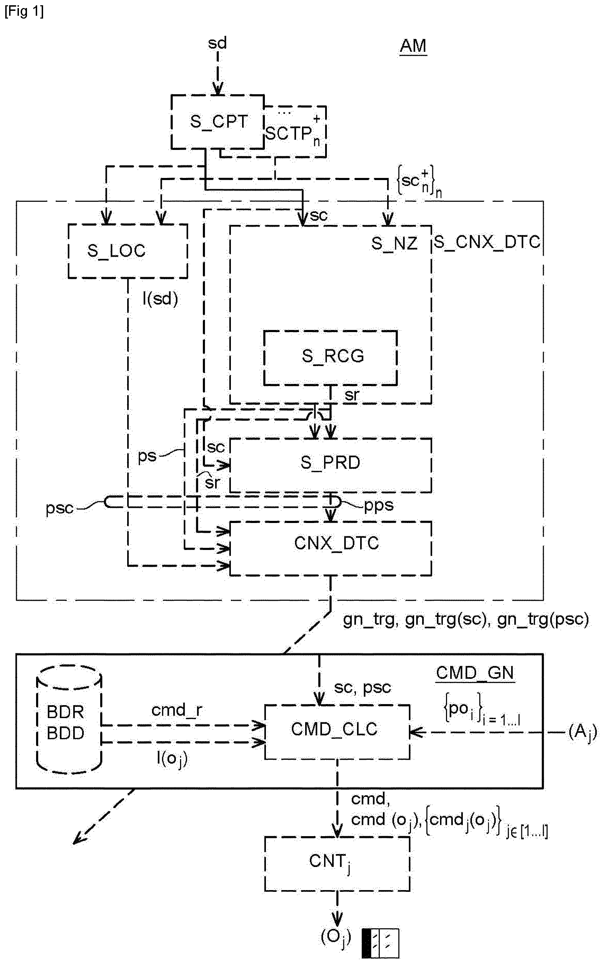

La figure 1 illustre un schéma simplifié d'un procédé d'asservissement de position d'équipements domestiques selon l'invention.

Le procédé d'asservissement de position d'équipements domestiques AM comporte une génération CMD_GN d'une commande cmd, cmd(oⱼ) en fonction d'un signal sonore capté sc, la commande générée cmd, cmd(oⱼ) étant apte à déclencher le contrôle CNTj par un actionneur Aj d'un équipement domestique Oj, l'actionneur Aj déplaçant l'équipement domestique dans une position posj fonction de la commande cmd, cmd(oⱼ). Notamment, la génération de commande est déclenchée en fonction du type de signal sonore capté.

Par position d'un équipement domestique est entendu, les positions d'ouverture, fermeture ou une ou plusieurs positions d'entrebâillement de l'ouvrant ; une ou plusieurs positions de diminution de la réverbération d'une pièce d'un dispositif d'annulation d'écho ; une ou plusieurs positions d'un réducteur de bruit telles que l'activation d'une bulle sonore ; de manière générale une ou plusieurs positions d'un dispositif de modification des caractéristiques acoustiques d'un bâtiment, voire d'une pièce d'un bâtiment ou d'une zone d'un bâtiment.

En particulier, le procédé d'asservissement AM comporte une analyse signal sonore S_NZ de signal sonore capté sc, la commande générée cmd, cmd(oⱼ)étant fonction du résultat ps d'analyse du signal sonore capté .

En particulier, le procédé d'asservissement AM comporte une reconnaissance signal sonore S_RCG de signal sonore capté sc, la commande générée cmd, cmd(oⱼ) étant fonction du signal sonore reconnu sr.

En particulier, le procédé d'asservissement AM comporte une localisation S_LOC de sources sonores du signal sonore capté sc, la commande générée cmd, cmd(oⱼ) étant fonction de la localisation I(sd) du signal sonore capté sc par rapport à la position d'un équipement domestique I(oⱼ).

En particulier, le procédé d'asservissement AM comporte une prédiction S_PRD d'évolution du signal sonore capté postérieure à l'instant de capture sonore.

En particulier, la commande générée cmd, cmd(oⱼ) est une commande programmée cmd_r en fonction d'au moins un paramètre prédit du signal sonore capté pps.

En particulier, le procédé d'asservissement AM comporte une détection CNX_DTC d'un contexte de modification de position d'équipements domestiques en fonction d'un signal sonore capté sc, la détection d'un contexte de modification de position d'équipements domestiques CNX_DTC déclenchant gn_trg, gn_trg(sc), gn_trg(psc) la génération de commande CMD_GN.

En particulier, la détection CNX_DTC de contexte de modification de position d'équipements domestiques est fonction d'un critère relatif au signal sonore capté sc parmi les critères suivants :
- niveau signal sonore du signal sonore capté nv(sc),
- type de signal sonore capté ty(sc),
- durée prédite du signal sonore capté T(sc),
- fréquence prédite d'apparition du signal sonore capté fa(sc).

En particulier, la détection CNX_DTC de contexte de modification de position est fonction d'au moins un paramètre d'asservissement préconfiguré app.

En particulier, le procédé d'asservissement AM comporte une capture sonore S_CPT.

Eventuellement, le procédé d'asservissement AM comporte une ou plusieurs captures sonores complémentaires S_CPT⁺, {S_CPT⁺ₙ}ₙ, n=1...N. La capture sonore complémentaire S_CPT⁺ (cas n=1) fournit un signal sonore capté complémentaire sc+, {sc⁺ₙ}ₙ et permet notamment une localisation de la source signal sonore S_LOC.

Eventuellement, le signal sonore capté complémentaire sc+, {sc⁺ₙ} ₙ comporte un signal sonore diffusé supplémentaire sd⁺ par une source supplémentaire non capté par la capture sonore S_CPT ou dont le signal sonore diffusé supplémentaire est noyé dans le signal sonore capté par la capture sonore S_CPT, c'est-à-dire que le niveau sonore du signal sonore diffusé supplémentaire est faible relativement au niveau sonore du signal sonore capté, voire que le signal sonore capté ne permet pas d'identifier le signal sonore diffusé supplémentaire (par exemple de le reconnaitre, d'identifier le type de son, etc.).

En particulier, l'analyse sonore S_NZ est effectuée sur le signal sonore capté sc, et éventuellement sur le signal sonore capté complémentaire sc+. Notamment, l'analyse sonore S_NZ analyse séparément chacun des signaux sonores captés parmi le signal sonore capté sc et d'un ou plusieurs signaux sonores captés complémentaires {sc⁺ₙ}ₙ, ou de manière conjointe les signaux sonores captés. Par analyse sonore conjointe est notamment entendu que l'analyse sonore utilise des résultats (intermédiaires ou finaux) de l'analyse d'un ou plusieurs premier(s) signaux captés, par exemple les signaux sonores captés complémentaires {sc⁺ₙ}ₙ, dans l'analyse d'un deuxième des signaux captés, par exemple le signal sonore capté sc.

En particulier, l'analyse sonore S_NZ détermine un ou plusieurs paramètres ps du signal sonore capté, notamment le niveau sonore du signal capté, la fréquence sonore du signal capté, le type de signal capté : bruit, mélodie, son naturel (oiseau, vent, etc.), son mécanique..., etc.

En particulier, la reconnaissance sonore S_RCG est effectuée sur le signal sonore capté sc, et éventuellement sur le signal sonore capté complémentaire sc+. Notamment, la reconnaissance sonore S_RCG reconnait une ou plusieurs sources sonores dont provient respectivement un ou plusieurs signaux sonores diffusés sd contenu dans un signal sonore capté sc, voire un signal sonore capté complémentaire sc+. Le signal sonore reconnu sr fourni par la reconnaissance sonore S_RCG comporte notamment une ou plusieurs données concernant la ou les sources sonores reconnus dans le signal sonore capté sc, par exemple le type de source sonore, un identifiant de source sonore, etc.

La reconnaissance sonore S_RCG reconnaît ces sources sonores en traitant chacun des signaux sonores captés parmi le signal sonore capté sc et d'un ou plusieurs signaux sonores captés complémentaires {sc⁺ₙ}ₙ séparément, ou de manière conjointe. Par reconnaissance sonore conjointe est notamment entendu que la reconnaissance sonore utilise des résultats (intermédiaires ou finaux) du traitement d'un ou plusieurs premier(s) signaux captés par la reconnaissance sonore, par exemple les signaux sonores captés complémentaires {sc⁺ₙ}ₙ, dans la reconnaissance sonore d'un deuxième des signaux captés, par exemple le signal sonore capté sc.

En particulier, l'analyse sonore S_NZ comporte la reconnaissance sonore S_RCG. Alors, l'analyse sonore S_NZ fournit non seulement des résultats d'analyse sonore, tel qu'un ou plusieurs paramètres ps du signal sonore capté, mais aussi un signal sonore reconnu sr.

En particulier, la localisation S_LOC de sources sonores du signal sonore capté sc permet de déterminer la localisation d'une ou plusieurs sources sonores dont respectivement le ou les signaux sonores diffusés sd composent le signal sonore capté sc. Notamment, la localisation S_LOC utilise le ou les signaux sonores captés complémentaires {sc⁺ₙ}ₙ permettant ainsi d'améliorer la précision de la localisation I(sd) ainsi déterminée. En particulier, la localisation déterminée I(sd) est la distance entre la source sonore et un capteur sonore effectuant la capture sonore S_CPT, voire la position relative de la source sonore par rapport au capteur sonore (notamment sous la forme de coordonnées centrées sur le capteur sonore, telles que des coordonnées polaires : distance, angle azimuth, et éventuellement angle polaire, ou des coordonnées cartésiennes : abscisse, ordonnée, et éventuellement la cote ou hauteur), voire la position de la source sonore dans un système générique : par exemple coordonnées GPS.

En particulier, la prédiction S_PRD du signal sonore capté sc estime une évolution du signal sonore capté sc suite à l'instant de capture sonore. La prédiction S_PRD fournit des données prédites pps telles que : soit un signal sonore prédit à partir duquel un ou plusieurs paramètres prédits du signal sonore capté sont déterminés, soit directement un ou plusieurs paramètres prédits du signal sonore capté sc. Notamment, la prédiction S_PRD permet d'estimer un ou plusieurs des paramètres prédits pps suivants : s'il s'agit d'un signal sonore continue ou répétitif ca(sc) ∈ {cnt, rec}, la fréquence d'apparition du signal sonore capté fap(sc), la durée prédite du signal sonore Tp(sc), etc.

Eventuellement, pour effectuer une prédiction sur le signal sonore capté sc, la prédiction S_PRD utilise au moins une des données suivantes :
- le résultat ps de l'analyse sonore S_NZ,
- le signal sonore reconnu sr fournit par la reconnaissance sonore S_RCG.

En particulier, la détection de contexte de modification de position d'équipement domestique CNX_DTC analyse le contexte en fonction du signal sonore capté sc, en particulier en fonction d'au moins une données parmi les suivantes :
- le signal sonore capté sc fourni par la capture sonore S_CPT ;
- le ou les signaux sonores complémentaires captés {sc⁺ₙ}ₙ fourni par la ou les captures sonores complémentaires S_CPT⁺, {S_CPT⁺ₙ}ₙ ;
- le résultat ps de l'analyse sonore S_NZ ;
- le signal sonore reconnu sr fournit par la reconnaissance sonore S_RCG ;
- au moins une localisation I(sd) déterminée par la localisation de source sonore S_LOC ;
- des données prédites pps relatives au signal sonore capté sc fournies par la prédiction S_PRD. L'analyse de contexte effectuée par la détection de contexte de modification de position d'équipement domestique CNX_DTC permet notamment d'estimer la situation environnementale ES_EST (non illustrée): nuisance sonore, météo, etc. Ainsi la détection de contexte CNX_DTC permet de déclencher une modification de position d'équipement domestique si la situation environnementale estimée répond à certaines conditions de modification de position d'équipements domestiques (CND_VRF).

Ces conditions de modification de position d'équipements domestiques sont éventuellement des conditions prédéfinies, par exemple des conditions cnx_cnd enregistrées CND_W préalablement à l'utilisation du procédé d'asservissement AM, notamment lors d'une configuration préalable AM_CNF (non illustrée) du procédé d'asservissement. Par exemple, un utilisateur du procédé d'asservissement saisie CND_NTR (non illustrée) des conditions cnx_cnd de modification de position d'équipements domestiques lors de cette configuration préalable AM_CNF. De manière alternative ou complémentaire, les conditions cnx_cnd de modification de position d'équipements domestiques sont enrichies sur la base des habitudes de l'utilisateur notamment lors d'un apprentissage, éventuellement mis en oeuvre par une IA, lors de cette configuration préalable AM_CNF.

De manière alternative ou complémentaire, au moins certaines des conditions de modification de position d'équipements domestiques sont obtenues CND_DT (non illustrée) par apprentissage en fonction d'au moins une commande instantanée d'au moins un actionneur d'un équipement domestique provenant d'une interface utilisateur soit d'un terminal utilisateur, soit d'un dispositif tel qu'un asservissement ou un assistant domotique mettant en oeuvre le procédé d'asservissement.

En particulier, la détection de contexte CNX_DTC est mise en oeuvre par un dispositif d'intelligence artificielle apte à analyser la situation environnementale, à déterminer CND_DT un ou plusieurs contextes de modification de position d'équipements domestiques et à vérifier si la situation environnementale analysée correspond à au moins l'un de ces contextes déterminés (CND_VRF).

Lorsque la détection de contexte CNX_DTC détermine que le contexte correspond à un contexte de modification de position d'équipement domestique, alors la détection de contexte déclenche gn_trg la génération CMD_GN d'une commande d'un actionneur d'un équipement domestique.

Eventuellement, le procédé d'asservissement AM comporte une détection de contexte sonore S_CNX_DTC. La détection de contexte sonore S_CNX_DTC comporte outre la détection de contexte CNX_DTC une ou plusieurs des étapes suivantes :
- l'analyse sonore S_NZ,
- la reconnaissance sonore S_RCG,
- la localisation S_LOC,
- la prédiction S_PRD.

La génération de commande CMD_GN d'un actionneur d'un équipement domestique utilise des données parmi les suivantes : signal capté sc, paramètres relatifs au signal capté psc (notamment le résultat ps de l'analyse sonore S_NZ, les données reconnus sr fournies par la reconnaissance sonore S_RCG, les données prédites pps fournies par la prédiction S_PRD, la localisation I(sd) déterminée par la localisation de source sonore S_LOC, etc.). Ces données sc, psc sont fournies par la détection de contexte CNX_DTC et/ou la détection de contexte sonore S_CNX_DTC soit directement soit dans un déclencheur gn_trg utilisé par la détection de contexte CNX_DTC et/ou la détection de contexte sonore S_CNX_DTC pour déclencher la génération de commande CMD_GN.

En particulier, la génération de commande CMD_GN d'un actionneur d'un équipement domestique utilise en outre des données relativement à un ou plusieurs équipements domestiques {poᵢ}_{i, i=1...l} fournies notamment par un actionneur Aj de l'équipement domestique Oi ou I(oj) par une base de données BDD.

En particulier, la génération de commande CMD_GN d'un actionneur d'un équipement domestique utilise en outre des commandes préprogrammées cmd_r en fonction de certaines règles relatives notamment au signal capté et/ou aux équipements domestiques Oi fournies notamment par une base de règles BDR.

En particulier, la génération de commande CMD_GN comporte une détermination d'une commande CMD_CLC notamment par apprentissage et/ou au moyen d'un dispositif d'intelligence artificielle.

Dans certains contextes détectés CNX_DTC est déclenché gn_trg une génération CMD_GN de plusieurs commandes {cmdⱼ(oⱼ)}ⱼ destinées à des actionneurs d'équipements domestiques distincts {O*ⱼ*}_{*j,j*∈[1···*I*]}*.*

En particulier, un contrôle d'équipement domestique CNTj reçoit une de la ou les commandes générées cmd, cmd(oⱼ). Le contrôle CNTj est mis en oeuvre par un actionneur Aj de l'équipement domestique Oj. Le contrôle CNTj entraine une modification par l'actionneur Aj de la position posⱼ de l'équipement domestique Oj.

Eventuellement, la commande générée cmd, cmd(oj), {cmdⱼ(oⱼ)}ⱼ comporte une position d'arrivée posⱼ commandée, ou un paramètre de déplacement de position (direction et/ou valeur).

En particulier, le procédé d'asservissement AM comporte le contrôle d'équipement domestique CNTj.

Un mode de réalisation particulier du procédé d'asservissement de position d'équipements domestiques est un programme comprenant des instructions de code de programme pour l'exécution des étapes du procédé d'asservissement lorsque ledit programme est exécuté par un processeur.

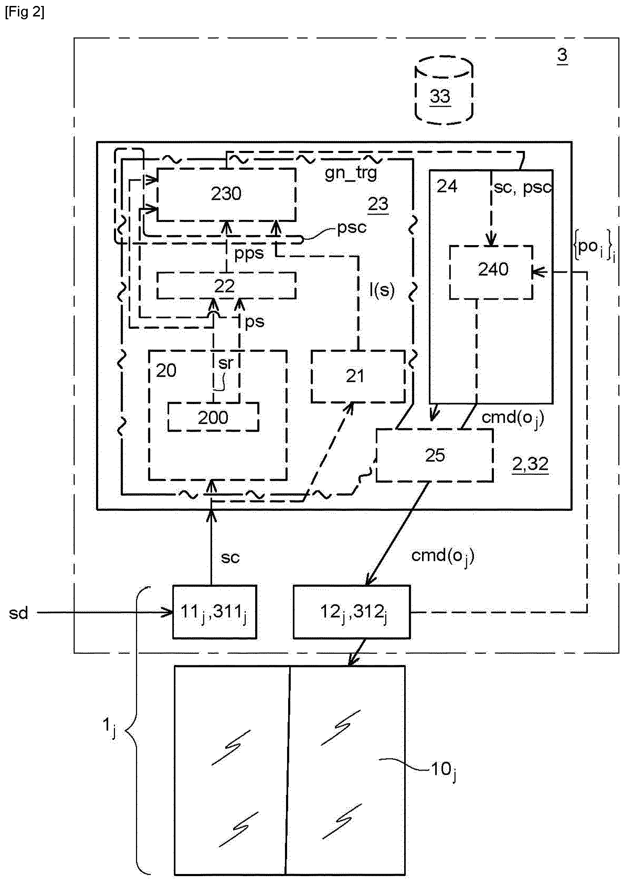

La figure 2 illustre un schéma simplifié d'un asservissement de position d'équipements domestiques selon l'invention.

L'asservissement 2,32 contrôle un actionneur 12j, 312j apte à modifier la position d'un équipement domestique 10j. L'asservissement 2,32 selon l'invention contrôle cet actionneur en fonction d'un son capté sc provenant d'au moins un capteur sonore 11j, 311j. En particulier, il est déclenché en fonction du type de signal sonore capté.

En particulier, un équipement domestique motorisé 1j comporte l'équipement domestique 10j proprement dit et au moins un actionneur 12j, 312j. Dans le cas d'équipements domestiques 10j doté de plusieurs vantaux, tels que des équipements domestiques à la française, des équipements domestiques coulissants, etc., l'équipement domestique motorisé 1j comporte un ou plusieurs actionneurs, chaque actionneur 12j, 312j étant apte à modifier la position d'un vantail distinct de l'équipement domestique 10j.

En particulier, un équipement domestique 1j apte à être commandé par un asservissement 2,32 selon l'invention comporte un capteur sonore 11j, 311j.

Dans un premier mode de réalisation un asservissement 2, 32 de position d'équipements domestiques comporte un générateur 24 de commande cmd en fonction d'un signal sonore capté sc. La commande générée cmd est apte à déclencher le contrôle cntⱼ par un actionneur 12j, 312j d'un équipement domestique 10j, l'actionneur déplaçant l'équipement domestique dans une position fonction de la commande. En particulier, le générateur de commande est déclenché en fonction du type de signal sonore capté.

En particulier, le générateur de commande 24 est apte à générer plusieurs commandes {cmdⱼ(oⱼ)}ⱼ en fonction d'un signal sonore capté sc, chaque commande générée cmdⱼ(oⱼ) étant apte à déclencher le contrôle cntj par un actionneur 12j distinct d'un équipement domestique distinct 10j.

Dans un deuxième mode de réalisation particulier, un système d'asservissement 3 comporte :
- un capteur sonore 311j colocalisé avec un équipement domestique 10j;
- un actionneur 312j de l'équipement domestique 10j apte à modifier la position posⱼ de l'équipement domestique ;
- un asservissement 32 de position d'équipements domestiques apte à générer une commande cmdⱼ(oⱼ) en fonction d'un signal sonore sc capté par le capteur sonore 311j, la commande générée cmdⱼ(oⱼ) étant apte à déclencher le contrôle cntj par l'actionneur 312j de l'équipement domestique 10j, l'actionneur 312j déplaçant l'équipement domestique dans une position fonction de la commande. Notamment, l'asservissement de position est apte à générer une commande déclenché en fonction du type de signal sonore capté.

Eventuellement, le système d'asservissement 3 comporte une ou plusieurs capteurs sonores complémentaires (non illustrés). Le capteur sonore complémentaire fournit un signal sonore capté complémentaire sc+, {sc⁺ₙ}ₙ et permet notamment une localisation de la source signal sonore.

En particulier, le système d'asservissement 3 comporte plusieurs capteurs sonores (non illustrés) colocalisés avec des équipements domestiques distincts {10j}ⱼ, et l'asservissement 32 de position étant apte à générer une commande cmd(oj) de contrôle d'un des équipements domestiques 10j colocalisé avec le capteur sonore 311j ayant capté le signal sonore capté en fonction duquel la commande est générée.

En particulier, l'asservissement 2,32 comporte un analyseur sonore 20 apte à analyser un signal sonore capté sc. La commande générée cmd, cmd(oⱼ) est fonction du résultat ps d'analyse du signal sonore capté .

En particulier, l'analyseur sonore 20 est apte à traiter le signal sonore capté sc, et éventuellement un signal sonore capté complémentaire sc+. Notamment, l'analyseur sonore 20 analyse séparément chacun des signaux sonores captés parmi le signal sonore capté sc et d'un ou plusieurs signaux sonores captés complémentaires {sc⁺ₙ}ₙ, ou de manière conjointe les signaux sonores captés. Par analyse sonore conjointe est notamment entendu que l'analyse sonore utilise des résultats (intermédiaires ou finaux) de l'analyse d'un ou plusieurs premier(s) signaux captés, par exemple les signaux sonores captés complémentaires {sc⁺ₙ}ₙ, dans l'analyse d'un deuxième des signaux captés, par exemple le signal sonore capté sc.

En particulier, l'analyseur sonore 20 est apte à déterminer un ou plusieurs paramètres ps du signal sonore capté, notamment le niveau sonore du signal capté, la fréquence sonore du signal capté, le type de signal capté : bruit, mélodie, son naturel (oiseau, vent, etc.), son mécanique..., etc.

En particulier, l'asservissement 2,32 comporte un dispositif de reconnaissance sonore 200 apte à traiter le signal sonore capté sc. La commande générée cmd, cmd(oⱼ) est fonction du signal sonore reconnu sr.

En particulier, le dispositif de reconnaissance sonore 200 est apte à traiter le signal sonore capté sc, et éventuellement le signal sonore capté complémentaire sc+. Notamment, le dispositif de reconnaissance sonore 200 est apte à reconnaître une ou plusieurs sources sonores dont provient respectivement un ou plusieurs signaux sonores diffusés sd contenu dans un signal sonore capté sc, voire un signal sonore capté complémentaire sc+. Le signal sonore reconnu sr fournit par la reconnaissance sonore S_RCG comporte notamment une ou plusieurs données concernant la ou les sources sonores reconnus dans le signal sonore capté sc, par exemple le type de source sonore, un identifiant de source sonore, etc.

Le dispositif de reconnaissance sonore 200 est apte à reconnaitre ces sources sonores en traitant chacun des signaux sonores captés parmi le signal sonore capté sc et d'un ou plusieurs signaux sonores captés complémentaires {sc⁺ₙ}ₙ séparément, ou de manière conjointe. Par reconnaissance sonore conjointe est notamment entendu que la reconnaissance sonore utilise des résultats (intermédiaires ou finaux) du traitement d'un ou plusieurs premier(s) signaux captés par la reconnaissance sonore, par exemple les signaux sonores captés complémentaires {sc⁺ₙ}ₙ, dans la reconnaissance sonore d'un deuxième des signaux captés, par exemple le signal sonore capté sc.

En particulier, l'analyseur sonore 20 comporte le dispositif de reconnaissance sonore 200. Alors, l'analyseur sonore 20 est apte à fournir non seulement des résultats d'analyse sonore, tel qu'un ou plusieurs paramètres ps du signal sonore capté, mais aussi un signal sonore reconnu sr.

En particulier, l'asservissement 2,32 comporte un localisateur 21 de sources sonores du signal sonore capté sc. La commande générée cmd, cmd(oⱼ) est fonction de la localisation I(sd) du signal sonore capté sc par rapport à la position d'un équipement domestique I(oⱼ).

En particulier, le localisateur 21 de sources sonores du signal sonore capté sc est apte à déterminer la localisation d'une ou plusieurs sources sonores dont respectivement le ou les signaux sonores diffusés sd composent le signal sonore capté sc. Notamment, le localisateur 21 utilise le ou les signaux sonores captés complémentaires {sc⁺ₙ}ₙ permettant ainsi d'améliorer la précision de la localisation I(sd) ainsi déterminée. En particulier, la localisation déterminée I(sd) est la distance entre la source sonore et un capteur sonore effectuant la capture sonore S_CPT, voire la position relative de la source sonore par rapport au capteur sonore (notamment sous la forme de coordonnées centrées sur le capteur sonore, telles que des coordonnées polaires : distance, angle azimuth, et éventuellement angle polaire, ou des coordonnées cartésiennes : abscisse, ordonnée, et éventuellement la cote ou hauteur), voire la position de la source sonore dans un système générique : par exemple coordonnées GPS.

En particulier, l'asservissement 2,32 comporte un dispositif de prédiction 22 d'évolution du signal sonore capté postérieure à l'instant de capture sonore.

En particulier, le dispositif de prédiction 22 du signal sonore capté sc est apte à estimer une évolution du signal sonore capté sc suite à l'instant de capture sonore. Le dispositif de prédiction 22 est apte à fournir des données prédites pps telles que : soit un signal sonore prédit à partir duquel un ou plusieurs paramètres prédits du signal sonore capté sont déterminés, soit directement un ou plusieurs paramètres prédits du signal sonore capté sc. Notamment, le dispositif de prédiction 22 est apte à estimer un ou plusieurs des paramètres prédits pps suivants : s'il s'agit d'un signal sonore continue ou répétitif ca(sc) ∈ {cnt, rec}, la fréquence d'apparition du signal sonore capté fap(sc), la durée prédite du signal sonore Tp(sc), etc. Eventuellement, pour effectuer une prédiction sur le signal sonore capté sc, le dispositif de prédiction 22 est apte à utiliser au moins une des données suivantes :
- le résultat ps de l'analyseur sonore 20,
- le signal sonore reconnu sr fournit par le dispositif reconnaissance sonore 200.

En particulier, l'asservissement 2,32 comporte un détecteur 230 d'un contexte de modification de position d'équipements domestiques en fonction d'un signal sonore capté sc. Le détecteur 230 d'un contexte de modification de position d'équipements domestiques déclenche gn_trg, gn_trg(sc), gn_trg(psc) la génération de commande, notamment par le générateur de commande 24.

En particulier, le détecteur 230 de contexte de modification de position d'équipements domestiques vérifie si le contexte en cours correspond à un contexte de modification de position d'équipements domestiques en fonction d'un critère relatif au signal sonore capté sc parmi les critères suivants :
- niveau signal sonore du signal sonore capté nv(sc),
- type de signal sonore capté ty(sc),
- durée prédite du signal sonore capté T(sc),
- fréquence prédite d'apparition du signal sonore capté fa(sc).

En particulier, le détecteur 230 de contexte de modification de position vérifie si le contexte en cours correspond à un contexte de modification de position d'équipements domestiques en fonction d'au moins un paramètre d'asservissement préconfiguré app.

En particulier, le détecteur 230 de contexte de modification de position d'équipement domestique CNX_DTC comporte un analyseur de contexte (non illustré) en fonction du signal sonore capté sc, en particulier en fonction d'au moins une données parmi les suivantes :
- le signal sonore capté sc fourni par le capteur sonore 11, 311j ;
- le ou les signaux sonores complémentaires captés {sc⁺ₙ}ₙ fourni par le ou les capteurs sonores complémentaires (non illustrés) ;
- le résultat ps de l'analyseur sonore 20 ;
- le signal sonore reconnu sr fournit par le dispositif de reconnaissance sonore 200 ;
- au moins une localisation I(sd) déterminée par le localisateur de source sonore 21 ;
- des données prédites pps relatives au signal sonore capté sc fournies par le dispositif de prédiction 22.

L'analyseur de contexte du détecteur 230 de contexte de modification de position d'équipement domestique est notamment apte à estimer la situation environnementale : nuisance sonore, météo, etc. Ainsi le détecteur de contexte 230 est apte à déclencher une modification de position d'équipement domestique si la situation environnementale estimée répond à certaines conditions de modification de position d'équipements domestiques.

Ces conditions de modification de position d'équipements domestiques sont éventuellement des conditions prédéfinies, par exemple des conditions cnx_cnd enregistrées préalablement à l'utilisation de l'asservissement 2,32, notamment lors d'une configuration préalable de l'asservissement 2, 32. Par exemple, un utilisateur de l'asservissement saisit des conditions cnx_cnd de modification de position d'équipements domestiques lors de cette configuration préalable notamment au moyen d'une interface utilisateur (non illustrée).

De manière alternative ou complémentaire, au moins certaines des conditions de modification de position d'équipements domestiques sont obtenues CND_DT (non illustrée) par apprentissage en fonction d'au moins une commande instantanée d'au moins un actionneur d'un équipement domestique provenant d'une interface utilisateur soit d'un terminal utilisateur, soit d'un dispositif tel qu'un asservissement ou un assistant domotique mettant en oeuvre le procédé d'asservissement.

En particulier, le détecteur de contexte 230 comporte un dispositif d'intelligence artificielle apte à analyser la situation environnementale et/ou à déterminer un ou plusieurs contextes de modification de position d'équipements domestiques et à vérifier si la situation environnementale analysée correspond à au moins l'un de ces contextes déterminés.

Lorsque le détecteur de contexte 230 détermine que le contexte correspond à un contexte de modification de position d'équipement domestique, alors le détecteur de contexte 230 est apte à déclencher gn_trg la génération, par un générateur de commande 24, d'une commande d'un actionneur 12j,312j d'un équipement domestique 10j.

Eventuellement, l'asservissement 2, 32 comporte un détecteur de contexte sonore 23. Le détecteur de contexte sonore 23 comporte outre le détecteur de contexte 230 un ou plusieurs des dispositifs suivants :
- l'analyseur sonore 20,
- le dispositif de reconnaissance sonore 200,
- le localisateur 21,
- le dispositif de prédiction 22.

Le générateur de commande 24 d'un actionneur d'un équipement domestique est notamment apte à utiliser des données parmi les suivantes : signal capté sc, paramètres relatifs au signal capté psc (notamment le résultat ps fourni par l'analyseur sonore 20, les données reconnus sr fournies par le dispositif de reconnaissance sonore 200, les données prédites pps fournies par le dispositif de prédiction 22, la localisation I(sd) déterminée par le localisateur 21, etc.). Ces données sc, psc sont fournies par le détecteur de contexte 230 et/ou le détecteur de contexte sonore 23 soit directement soit dans un déclencheur gn_trg utilisé par le détecteur de contexte 230 et/ou le détecteur de contexte sonore 23 pour déclencher le générateur de commande 24.

En particulier, le générateur de commande 24 d'un actionneur d'un équipement domestique utilise en outre des données relativement à un ou plusieurs équipements domestiques {poᵢ}ᵢ, _{i=1...I} fournies notamment par un actionneur Aj de l'équipement domestique Oi ou I(oj) par une base de données BDD.

En particulier, le générateur de commande 24 d'un actionneur d'un équipement domestique est apte à utiliser en outre des commandes préprogrammées cmd_r en fonction de certaines règles relatives notamment au signal capté et/ou aux équipements domestiques Oi fournies notamment par une base de règles 33.

En particulier, le générateur de commande 24 comporte un dispositif de détermination 240 d'une commande notamment par apprentissage et/ou au moyen d'un dispositif d'intelligence artificielle.

Dans certains contextes détectés, est déclenché gn_trg une génération, par le générateur de commande 24, de plusieurs commandes {cmdⱼ(oⱼ)}ⱼ destinées à des actionneurs d'équipements domestiques distincts {10*ⱼ*}_{*j,j*∈[1···*I*]}.

En particulier, l'asservissement 2, 32 comporte un émetteur 25 apte à transmettre la commande cmd(oj) générée par le générateur de commande 24 à destination d'un actionneur 12j, 312j, notamment lorsque le générateur de commande 24 et l'actionneur 12j,312j ne sont pas colocalisés.

En particulier, un actionneur 12j,312j reçoit une de la ou les commandes générées cmd, cmd(oⱼ). L'actionneur 12j, 312j est alors apte à contrôler l'équipement domestique 10j en fonction de la commande cmd, cmd(oⱼ), ce contrôle CNTj entrainant une modification par l'actionneur 12j, 312j de la position posⱼ de l'équipement domestique 10j.

Eventuellement, la commande générée cmd, cmd(oj), {cmdⱼ(oⱼ)}ⱼ comporte une position d'arrivée posⱼ commandée, ou un paramètre de déplacement de position (direction et/ou valeur).

Eventuellement, la commande générée cmd, cmd(oj), {cmdⱼ(oⱼ)}ⱼ comporte un identifiant de l'actionneur 12j, 312j destinataire de la commande et/ou de l'équipement domestique 10j dont la position est à modifier.

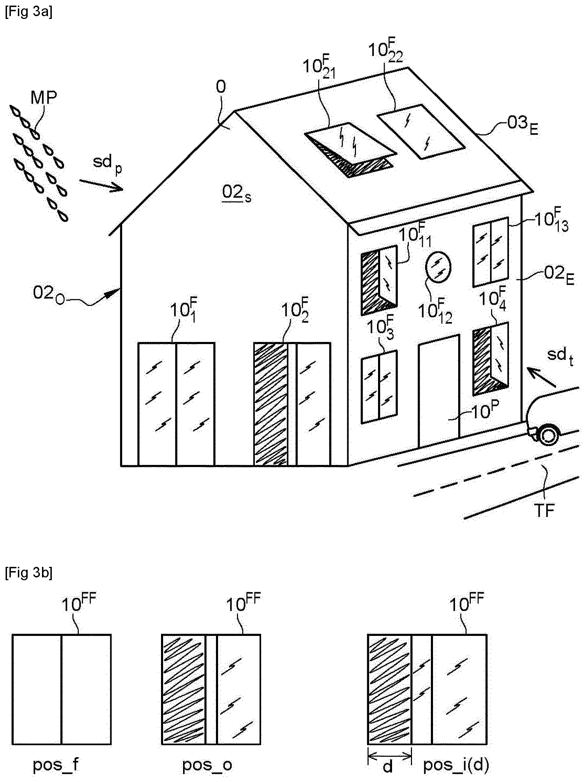

Les figures 3a à 3b illustrent un cas d'usage avec différentes positions de différents types d'équipements domestiques.

La figure 3a illustre un schéma simplifié d'un exemple de situation d'usage de l'asservissement de position d'équipements domestiques selon l'invention.

Prenons le cas d'une habitation 0 comportant plusieurs équipements domestiques extérieurs: notamment une porte d'entrée 10^{P}, des portes fenêtres coulissantes 10^{F}₁, 10^{F}₂ sur la façade sud 02s, des fenêtres à la française 10^{F}₃, 10^{F}₄, 10^{F}₁₁, 10^{F}₁₂, 10^{F}₁₃ sur la façade est 02_{E}, des fenêtres de toit 10^{F}₂₁, 10^{F}₂₂ sur le toit est 03_{E}.

L'habitation 0 est dotée d'un ou plusieurs capteurs sonores 11j, 311j et d'un asservissement 2, 32 selon l'invention (non visible).

Les capteurs sonores captent un ou plusieurs signaux sonores de l'environnement extérieur : son météorologique tel que le bruit sdₚ de la pluie MP, son mécanique tel que les bruits sdt de la circulation TF, etc.

L'asservissement 2, 32 permet de générer en fonction du son capté une commande d'au moins un des équipements domestiques 10^{P}, 10^{F}₁, 10^{F}₂, 10^{F}₃, 10^{F}₄, 10^{F}₁₁, 10^{F}₁₂, 10^{F}₁₃, 10^{F}₂₁, 10^{F}₂₂ de l'habitation 0.

Prenons l'exemple où le signal sonore capté sc comporte le son de la pluie sdₚ. Dans ce contexte, l'asservissement 2, 32 est apte à générer:
- des commandes de fermeture :
   ∘ soit de tous les équipements domestiques de l'habitation encore ouverts, en l'occurrence la porte fenêtre 10^{F}₂, les fenêtres à la française 10^{F}₄, 10^{F}₁₁, la fenêtre de toit 10^{F}₂₁ ;
   ∘ soit des équipements domestiques de certaines façades en fonction de la direction de la pluie, en l'occurrence des façades nord, ouest et sud 10^{F}₂ si l'asservissement est apte à déterminer la direction de la pluie, en l'occurrence la pluie venant de l'ouest.
- des commandes de diminution de l'ouverture des équipements domestiques de certaines façades en fonction de la direction de la pluie, en l'occurrence de la façade est 10^{F}₄, 10^{F}₁₁, 10^{F}₂₁ si l'asservissement est apte à déterminer la direction de la pluie, en l'occurrence la pluie venant de l'ouest.

Eventuellement, lorsque le son de pluie s'interrompt, l'asservissement 2, 32 est apte à générer une commande d'ouverture des équipements domestiques qui étaient ouverts préalablement à la détection de ce son de pluie sdₚ.

Prenons l'exemple où le signal sonore capté sc comporte un son de la circulation sdt continue ou régulier d'un niveau sonore estimé comme gênant. Dans ce contexte, l'asservissement 2, 32 est apte à générer :
- des commandes de fermeture :
   ∘ soit de tous les équipements domestiques de l'habitation encore ouverts, en l'occurrence la porte fenêtre 10^{F}₂, les fenêtres à la française 10^{F}₄, 10^{F}₁₁, la fenêtre de toit 10^{F}₂₁ ;
   ∘ soit des équipements domestiques de certaines façades en fonction de la position du trafic TF, en l'occurrence des façades sud, ouest et sud 10^{F}₂10^{F}₄, 10^{F}₁₁, 10^{F}₂₁ si l'asservissement est apte à déterminer la localisation du trafic TF par rapport à l'habitation 0, en l'occurrence la route étant au sud.

Eventuellement, lorsque le son de circulation s'interrompt, l'asservissement 2, 32 est apte à générer une commande d'ouverture des équipements domestiques qui étaient ouverts préalablement à la détection de ce son de circulation sdt.

Ainsi, lorsque l'environnement est bruyant et que l'ouverture d'un ou plusieurs équipements domestiques est gênant pour les occupants, l'asservissement 2, 32 permet de modifier la position d'un ou plusieurs équipements domestiques, notamment de fermer un ou des ouvrant(s) afin d'isoler les occupants du bruit environnemental, d'activer une bulle sonore mise en oeuvre par un réducteur de bruit, etc. A noter, que dans l'exemple le bruit environnemental est un bruit extérieur et les équipements domestiques des équipements domestiques sur une façade extérieure d'un bâtiment, mais que l'invention peut aussi s'appliquer à des équipements domestiques intérieurs notamment entre deux pièces ou entre une pièce et une circulation (couloir notamment) d'un bâtiment dans le cas de bruit environnemental interne, par exemple, fermer automatiquement la porte d'une salle de réunion ou d'un bureau lorsque plusieurs personnes discutent dans le couloir ou au niveau d'un distributeur de boisson à proximité ou lorsque qu'un outil, notamment une imprimante, a un fonctionnement bruyant dont la durée est gênante.

Une solution serait que l'asservissement 2, 32, en particulier le détecteur de contexte 230 est apte à déterminer le niveau sonore du bruit dans le signal sonore capté sc et à déclencher la génération d'une commande de fermeture si le niveau sonore du bruit est supérieur à un niveau sonore seuil préconfiguré (notamment par un occupant ou un administrateur du bâtiment).

Néanmoins, la source du bruit peut donc être continue ou temporaire. Lorsque les bruits sont intermittents, il peut être plus pénible d'ouvrir et fermer le(s) ouvrant(s) de manière répétitive, c'est à dire s'avoir une oscillation erratique de la position de l'ouvrant, aussi nommée bagotement de l'ouvrant. Dans ce cas, la règle appliquée peut être par l'asservissement 2, 32 peut être de fermer, voire de garder fermer, l'ouvrant, c'est-à-dire que l'état permanent de l'équipement domestique est la position fermée.

Une autre solution complémentaire ou alternative serait que l'asservissement 2, 32, , en particulier le détecteur de contexte 230 est apte à déterminer une ou plusieurs données relatives au bruit notamment parmi les suivantes :
- données relatives au type de bruit déterminé par un analyseur sonore 20 et/ou un dispositif de reconnaissance sonore 200,
- de la fréquence d'apparition du bruit déterminée par le dispositif de prédiction sonore 22,
- de la durée prédite du bruit déterminée par le dispositif de prédiction sonore 22,
- etc. ;
et à déclencher la génération d'une commande de fermeture en fonction de ces données relatives au bruit.

Ainsi, l'asservissement 2,32 est apte à déterminer, voire à reconnaître les types de sons captés, notamment en utilisant des technologies d'intelligence artificielle ou IA. En fonction du type de son, l'asservissement 2, 32 est apte à déterminer s'il est pertinent de fermer/ouvrir l'ouvrant. En effet, pour un bruit bref (passage d'un seul avion par exemple), le temps de fermeture/ouverture ne rend pas l'opération pertinente. Pour un bruit plus long (par exemple, lorsque le voisin passe la tondeuse), l'asservissement 2, 32 est apte à déterminer que la fermeture des équipements domestiques est plus pertinente.

En outre, l'asservissement 2, 32 est apte à adapter, au moyen des technologies d'intelligence artificielle, sa réponse à un contexte individuel, à l'environnement d'un bâtiment, voire d'une pièce d'un bâtiment (maison, bureau, etc.), de manière générale à des habitudes d'usage de l'utilisateur et/ou du bâtiment notamment déterminé(s) par analyse, détection et/ou reconnaissance.

En particulier, l'analyse sonore 20, voire la reconnaissance sonore 200, est notamment apte à classifier les sons, par exemple dans deux classes : sons agréables et sons désagréables. Par sons désagréables et agréables étant entendus des sons pour lesquels un occupant respectivement commanderait ou non une fermeture des équipements domestiques. A noter, qu'un son pourra être classifié agréable ou désagréable en fonction du contexte d'activité de l'occupant (sieste, méditation, travail, lecture, jeux, discussion, appel téléphonique, etc.). Ainsi, le chant d'un oiseau ou certaine musique peuvent être considérés comme agréables et donc non dérangeants. Cela dépend du goût de chacun, de l'heure de la journée : le chant d'un oiseau au petit matin peut écourter le sommeil, une musique douce ne gêne pas une conversation mais une musique symphonique ou un morceau de hard rock si, etc.

En particulier, l'asservissement 2,32 est apte à tenir compte de l'occupation ou non du bâtiment, voire de la pièce dans laquelle un équipement domestique est placé.

Afin de respecter la sécurité du bien, l'asservissement 2, 32 est apte à générer une commande d'ouverture des équipements domestiques dans certaines conditions de sécurité et, éventuellement à lui préférer une commande de modification de position permettant d'entrebâiller les équipements domestiques avec un angle et/ou une largeur inférieur(e) ou égal(e) respectivement à un angle de sécurité et/ou une largeur de sécurité d'équipement domestique sécurisé respectivement pour cet angle de sécurité et/ou cette largeur de sécurité. Par exemple, dans le cas d'équipement domestique oscillo-battant, l'équipement domestique étant sécurisé en mode oscillant mais pas en mode battant, l'asservissement 2, 32 est apte à commander l'ouverture de cet équipement domestique en mode oscillant seulement dans le cas le cas où les conditions de sécurité ne sont pas réunies.

La figure 3b illustre un schéma simplifié de différentes positions d'un équipement domestique coulissant asservi par l'asservissement selon l'invention.

L'équipement domestique coulissant 10_{FF} peut avoir plusieurs positions :
- une position de fermeture pos_f ;
- une position d'ouverture pos_o ;
- une position d'entrebâillement pos_i(d) définie par la largeur d de l'ouverture.

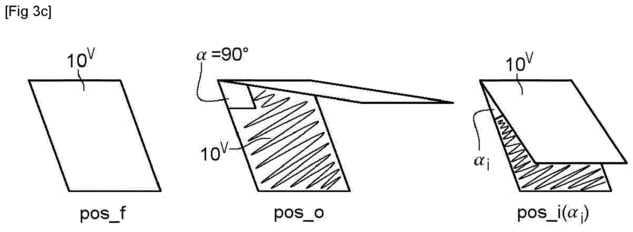

La figure 3c illustre un schéma simplifié de différentes positions d'un équipement domestique de toit asservi par l'asservissement selon l'invention.

L'équipement domestique de toit 10ᵥ, notamment un Velux^{™}, peut avoir plusieurs positions :
- une position de fermeture pos_f ;
- une position d'ouverture pos_o dans laquelle le vantail de la fenêtre forme notamment un angle *α* de 90° par rapport au chambranle de l'ouvrant;
- une position d'entrebâillement *pos_i*(*αᵢ*) définie par l'angle *αᵢ* de l'ouverture.

Les différents modes de réalisation de l'invention signal sont des modes de réalisations qui peuvent être implémentés seuls ou en combinaison avec un ou plusieurs d'entre eux.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

## Revendications

1. Procédé d'asservissement de position d'équipements domestiques, le procédé d'asservissement comportant une génération d'une commande en fonction d'un signal sonore capté, la génération de commande étant déclenchée en fonction du type de signal sonore capté, la commande générée étant apte à déclencher le contrôle par un actionneur d'un équipement domestique, l'actionneur déplaçant l'équipement domestique dans une position fonction de la commande.

2. Procédé d'asservissement selon la revendication précédente, le procédé d'asservissement comportant une analyse signal sonore de signal sonore capté, la commande générée étant fonction du résultat d'analyse du signal sonore capté.

3. Procédé d'asservissement selon l'une quelconque des revendications précédentes, le procédé d'asservissement comportant une reconnaissance signal sonore de signal sonore capté, la commande générée étant fonction du signal sonore reconnu.

4. Procédé d'asservissement selon l'une quelconque des revendications précédentes, le procédé d'asservissement comportant une localisation de sources sonores du signal sonore capté, la commande générée étant fonction de la localisation de sources sonores du signal sonore capté par rapport à la position d'un équipement domestique.

5. Procédé d'asservissement selon l'une quelconque des revendications précédentes, le procédé d'asservissement comportant une prédiction d'évolution du signal sonore capté postérieure à l'instant de capture sonore.

6. Procédé d'asservissement selon la revendication précédente, dans lequel la commande générée est une commande programmée en fonction d'au moins un paramètre prédit du signal sonore capté.

7. Procédé d'asservissement selon l'une quelconque des revendications précédentes, le procédé d'asservissement comportant une détection d'un contexte de modification de position d'équipements domestiques en fonction d'un signal sonore capté, la détection d'un contexte de modification de position d'équipements domestiques déclenchant la génération de commande.

8. Procédé d'asservissement selon la revendication précédente, dans lequel la détection de contexte de modification de position d'équipements domestiques est fonction d'un critère relatif au signal sonore capté parmi les critères suivants :
- niveau signal sonore du signal sonore capté,
- type de signal sonore capté,
- durée prédite du signal sonore capté,
- fréquence prédite d'apparition du signal sonore capté.

9. Procédé d'asservissement selon l'une quelconque des revendications 7 ou 8, dans lequel la détection de contexte de modification de position est fonction d'au moins un paramètre d'asservissement préconfiguré.

10. Programme comprenant des instructions de code de programme pour l'exécution des étapes du procédé d'asservissement selon l'une quelconque des revendications précédentes lorsque ledit programme est exécuté par un processeur.

11. Asservissement de position d'équipements domestiques comportant un générateur de commande en fonction d'un signal sonore capté, le générateur de commande étant déclenché en fonction du type de signal sonore capté, la commande générée étant apte à déclencher le contrôle par un actionneur d'un équipement domestique, l'actionneur déplaçant l'équipement domestique dans une position fonction de la commande.

12. Asservissement de position d'équipements domestiques selon la revendication précédente, dans lequel le générateur de commande est apte à générer plusieurs commandes en fonction d'un signal sonore capté, chaque commande générée étant apte à déclencher le contrôle par un actionneur distinct d'un équipement domestique distinct.

13. Asservissement de position d'équipements domestiques selon la revendication précédente, dans lequel un équipement domestique est un équipement parmi les suivants :
- un ouvrant ;
- un réducteur de bruit ;
- un dispositif d'annulation d'écho.

14. Système d'asservissement comportant :
- un capteur sonore colocalisé avec un équipement domestique ;
- un actionneur de l'équipement domestique apte à modifier la position de l'équipement domestique
- un asservissement de position d'équipements domestiques apte à générer une commande en fonction d'un signal sonore capté par le capteur sonore déclenché en fonction du type de signal sonore capté, la commande générée étant apte à déclencher le contrôle par l'actionneur de l'équipement domestique, l'actionneur déplaçant l'équipement domestique dans une position fonction de la commande.

15. Système d'asservissement selon la revendication précédente, le système d'asservissement comportant plusieurs capteurs sonores colocalisés avec des équipements domestiques distincts, et l'asservissement de position étant apte à générer une commande de contrôle d'un des équipements domestiques colocalisé avec le capteur sonore ayant capté le signal sonore capté en fonction duquel la commande est générée.
